(19)

Europäisches
Patentamt
European
Patent Office
Office européen
des brevets

(11) **EP 4 110 036 B1**

(12) **EUROPEAN PATENT SPECIFICATION**

(45) Date of publication and mention
of the grant of the patent:
**18.03.2026 Bulletin 2026/12**

(21) Application number: **20727206.3**

(22) Date of filing: **15.05.2020**

(51) International Patent Classification (IPC):
***A01D 34/416*** (2006.01)

(52) Cooperative Patent Classification (CPC):
**A01D 34/4167**

(86) International application number:
**PCT/EP2020/063683**

(87) International publication number:
**WO 2021/170256 (02.09.2021 Gazette 2021/35)**

(54) **TRIMMER HEAD**

TRIMMERKOPF

TÊTE DE COUPE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.02.2020 PT 2020116136**

(43) Date of publication of application:
**04.01.2023 Bulletin 2023/01**

(73) Proprietor: **T&I Consulting AB
13337 Saltsjöbaden (SE)**

(72) Inventor: **ANDREASSON, Bo Christer
2765-391 Estoril (PT)**

(74) Representative: **RCF - Protecting Innovation, S.A.
Rua Tomás Ribeiro, nº 45-2º
1050-225 Lisboa (PT)**

(56) References cited:
**WO-A2-2010/062199       DE-U1- 202007 001 567
US-A- 4 987 681            US-A- 5 210 996
US-A1- 2005 076 514**

## Description

## FIELD OF THE INVENTION

The subject invention relates to a trimmer head for vegetation trimming and cutting machines. The invention belongs to the field of apparatus for trimming and cutting grass, small bush wood, hedges, weed and reed.

## BACKGROUND OF THE INVENTION

Globally, there is a huge market for trimmers, brush cutters, hedge trimmers and clearing saws. There is a large global population of grass and weed trimmers with trimmer lines in use. This population has been built up over several decades.

Products with trimmer heads equipped with flexible trimmer lines are common both for consumer and commercial use.

Trimmer products are made in different sizes, powered by corded electric motors, cordless electric motors and combustion engines. The power range spans from a few hundred Watts to about 3 kW.

Trimmer line thicknesses usually range in between 1.5 to 4 mm.

Trimmer lines can wear quickly and break frequently. Therefore, continuous replacement of the lines is necessary.

To achieve a high performance, the trimmer line must repeatedly be adjusted to the correct length. The adjustment can be made manually, semi-automatically or fully automatically depending on trimmer head type.

One advantage of trimmer lines is they can be used close to objects and materials like concrete, stones, trees and other. Another advantage is the trimmer line has a consistent performance. If it wears or breaks, some more line could be fed out.

On the other hand, trimmer lines could leave some bad-looking marks on objects due to occasional hits during operation.

Moreover, flexible trimmer lines are usually made of various plastic materials. One disadvantage is worn or broken-off plastic pieces are wasted and accumulated where the trimmer lines are used. It could take several decades or even more to fully break down such plastic materials. Trimmer lines made of biodegradable plastic materials are better in this respect but it could still take more than a decade to fully break them down. This means, even with biodegradable trimmer lines, there will be an accumulation of plastic material waste on the ground. Recycling is not possible or at least very difficult. The conclusion is trimmer lines contribute to the littering and aggravation of the global environmental situation. Cutting blades made of metal are better in this respect and they can easily be recycled.

Grass cutters and brush cutters frequently also use rotating cutting knives and cutting blades to cut and trim grass and other vegetation. Such knives and blades are normally not fully shielded. While they are effective in operation, they can destroy objects or at least leave bad-looking marks, plus they easily get dull or destroyed if they hit hard objects.

Both flexible trimmer lines and unshielded cutting blades have a further drawback of sometimes scalping the lawn or other vegetation.

Products using flexible trimmer lines and cutting blades generally have protection guards of various designs. Typically, the protection guards do not fully cover the trimmer lines and cutting blades.

US4987681A discloses a hand grass trimmer where different types of guards are applied. One of the designs is a front guard with a plurality of tines with openings in between to allow the grass to come through for cutting. Furthermore, as an alternative, US4987681A includes a full circle top protection for the trimmer line and an optional partially open bottom cover plate. Still, some of the rotating parts are not shielded.

EP1364571A2 discloses a vegetation cutting tool with a reversible electric motor. The cutting tool could be either a trimmer line or a cutting blade. The trimming tool may also be equipped with a blower feature as part of the trimming guard of the trimming tool, or, a blower assembly integrated into the tool components. The blowing direction is to the front, away from the operator, such that it works as a radial blower to spread debris (leaves, small stones) away from the cutting blades/lines. The trimming guard shown does not protect the full circle and it has no bottom cover protection shield.

GB1143812A discloses a clipping machine with cutting blades mounted in between two plates. The cutting edges of the knives are not guarded and stick out in between the plates. The bottom plate also works as a ground protection shield. There is no vacuum fan vacuuming the vegetation towards the cutting knives or the cut vegetation into the chamber between the plates (10, 12) nor a systematic flow of cuttings out of the chamber either. Furthermore, as the knife edges are not shielded, this could be a safety concern.

US2017290261A1 discloses a guard for a flexible rotating cutting element. The guard could cover a part of the perimeter or a full 360 degrees. The guard could also be equipped with slots. There is no ground protection shield. The trimmer line and other rotating parts are accessible also when the trimmer is running.

US2005076514A1 discloses a lawn trimming device including a hood with a downwardly facing opening to allow the opening to be placed parallel to the ground, the hood defining a cutting cavity. A cutting means rotatably mounted relative to the hood is provided it is positioned within the cutting cavity of the hood adjacent the opening. A hovering fan is also preferably included within the hood. Blade edges are not shielded.

WO2010062199A2 discloses mowers producing an air flow that inhibits the build-up of cut material on the mower housing and that facilitates fine comminution of cut material. The blades produce lift so that grass may be lifted towards the cutting blades for effective cutting whilst an "air curtain" inhibits the build-up of cut material on the housing. Cut material within the housing may be directed towards a region in which cutting blades pass an anvil to facilitate fine comminution, reduce dwell time of the cut material in the mower and reduce the build-up of cut material on walls of the housing. Consequently, the mowers may be of reduced size, have improved manoeuvrability and energy requirements may be greatly reduced. Blade edges are not shielded.

US5210996A discloses an air-floated apparatus, such as a lawn mower or vacuum cleaner, that includes a housing having an open bottom and an air intake opening. The housing is adapted to cooperate with a support surface beneath the housing to define a substantially enclosed chamber. At least one air impeller is provided for pressurizing air within the chamber sufficient to float the housing above the support surface. Also, in this case there is no dedicated shield for the blade edges.

DE202007001567U1 discloses a mowing device having a horizontal rotating cutting means and a protection device that is arranged radially around the orbit of the cutting means and also on its upper side. The protection device reaches to underneath the lower edge of the cutting means. A strand-free mower is also disclosed. However, cutting edges are not shielded.

Furthermore, both trimmer lines and cutting blades have a certain centrifugal fan effect. As a result, the grass to be cut could to some extent be blown away from the cutting means. This fan effect is smaller, though not negligible, for flat and thin cutting blades with just a few cutting knives.

Therefore, a need exists for a trimmer head that overcomes the drawbacks and limitations of the prior art. In particular, there is a need for a more environmentally sound trimmer head that also may increase the cutting efficiency.

## BRIEF DESCRIPTION OF THE DRAWINGS

In the following, a detailed description of the invention is provided making reference to the appended drawings, in which:

Fig. 1 shows a section view of an embodiment of the trimmer head of the invention.

Fig. 2 shows a top view of the trimmer head of Fig. 1.

Fig. 3 is a schematic top view showing a preferred embodiment of the cutting blade (46), the cutting blade shield (2) and the vacuum air intake zone (26), and also showing a local magnifying of the same.

Fig. 4 shows a schematic graph explaining the air-speed variations in the vacuum air intake zone (26).

Fig. 5 shows a top view of a design of a prior art cutting blade (8) with three symmetrical radial cutting knives (17) that have sharp edges (29) on both sides of the cutting blade knifes (17) to make it possible to use both sides of the cutting blade.

Fig. 6 shows a schematic graph explaining the air-speed variations in the vacuum air intake zone (26) for a prior art cutting blade like the one of Fig. 5.

Fig. 7 shows another embodiment of the present invention, where the inner height of the cutting blade shield (2) is reduced and similar to the height of the vacuum air intake (34).

Fig. 8 shows an embodiment in which the cutting blade shield (2) comprises one solid part arranged between two parts with through-openings (21).

## SUMMARY OF THE INVENTION

The subject invention relates to a trimmer head for vegetation trimming and cutting machines having the features of claim 1.

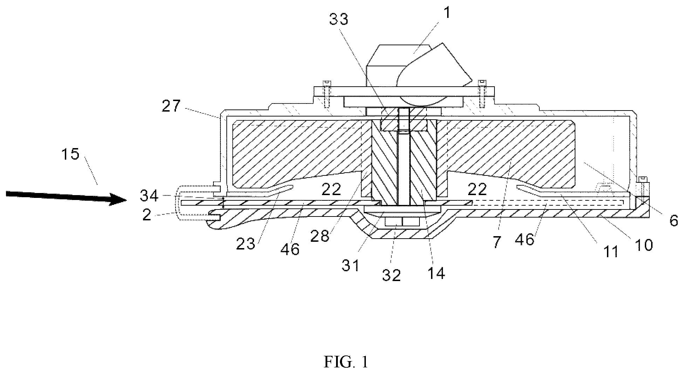

With reference to Figures 1 to 8, the trimmer head of the invention comprises a housing (27); a cutting blade (46); and a cutting blade shield (2) with a plurality of through-openings (21); the trimmer head characterized in that it further comprises a vacuuming air assembly arranged in the housing (27) such that, in operation, a vacuuming air flow is generated and directed from said cutting blade shield openings (21) to an interior of the housing (27).

Preferably, each of the plurality of through-openings (21) has a width in the range of 4 to 12 mm.

According to the invention, the vacuuming air assembly comprises at least one vacuum air intake (34) pointing to said through-openings (21) such that, in operation, a vacuuming air flow is directed to the vacuum air intake (34).

In another embodiment, the vacuuming air assembly comprises a vacuuming centrifugal fan (7) arranged in air-connection with at least one of the cutting blade shield through-openings (21), such that, in operation, the centrifugal fan (7) vacuums air through said, at least one, cutting blade shield through-openings (21).

In a further embodiment, the trimmer head further comprises a vacuum air intake zone (26) arranged in between the vacuum air intake (34) and an air intake (22) of the vacuuming centrifugal fan (7). Preferably, the vacuuming centrifugal fan (7) comprises 8 to 20 fan wings (39), more preferably 14 fan wings (39).

In a preferred embodiment, the cutting blade (46) is a rotating blade comprising at least one knife (4). The at least one knife (4) is angled in relation to a reference radial line (5). Preferably, the said cutting blade (46) comprises 2 to 6 of said angled knives (4), more preferably 5 angled knives (4).

In other embodiment, a total number of cutting blade knives (4) and vacuuming fan wings (39) is an odd number.

Preferably, each of the said fan wings (39) is radially straight-shaped. In another preferred embodiment, the trimmer head further comprises a ground shield (10) attached to the housing (27), wherein the said ground shield (10) is fixed to or detachable from the housing (27).

In a further embodiment, the housing (27) is made of a plurality of parts and the ground shield (10) is fixed to, or detachable from, at least one of said plurality of parts.

Preferably, the cutting blade shield (2) is attachable to and detachable from the housing (27).

Preferably, clearances between parts of the trimmer head are less than 5 mm, more preferably in the range of 2 to 5 mm, most preferably of 2 mm.

In another embodiment, the cutting blade shield (2) comprises at least one solid part and at least one through-openings part. Preferably comprises one solid part arranged between two through-openings parts.

According to the invention, both the cutting blade shield (2) and the vacuum air intake (34) are provided with about the same height.

## DETAILED DESCRIPTION OF THE INVENTION

The present invention relates to a new type of trimmer head with an enclosed and guarded cutting blade to improve safety, performance and environmental aspects.

The present trimmer head is designed to replace regular grass trimmer heads with flexible trimmer lines for many work situations. In several cases it also replaces regular cutting blades.

The trimmer head of the present invention is also suitable to be applied in robotic lawn mowers.

In the operational context of the present invention, it should be mentioned that moving objects by vacuum air is difficult from a distance. Vacuuming objects requires the vacuum nozzle to come very close to the object to be vacuumed. Vacuum cleaners in general are a good example. Neither the air-speed nor the vacuum is sufficient to generate enough pulling force at a long distance and the static vacuum pressure rapidly loses power when the distance to the nozzle increases. Even a small increase of the distance between an object and the vacuum nozzle could cause a significant drop of the vacuum pulling force. In spite of regular vacuum cleaners have relatively high power, the reach to pull in an object into the vacuum cleaner tube is not more than a couple of centimetres or even less than 1 centimetre for heavy objects.

Vacuum nozzles, opposite to blow nozzles, do not create a concentrated air stream that can move objects at a long distance. Instead, the air-flow becomes more spread out and the air-flow speed becomes significantly slower when the distance increases. However, a vacuum air-flow does create a high pulling force provided the object to be vacuumed comes close enough to the vacuum air intake and the vacuum power is sufficient.

POSITIVE DISPLACEMENT is a term commonly used in connection with pumps in which a moving fluid is trapped in a cavity and then forced into a discharge volume. The positive displacement pump can create both vacuum and pressure. The flow direction is usually perpendicular to the moving parts of the pump creating the displacement. However, the cavity does not need to be closed to accomplish a displacement effect. For example, when a piston moves in a cylinder that is open in both ends, there will be a vacuum displacement in one end and a pressure displacement in the other end. There can also be a continuous displacement of fluids for some applications, for example, when a rotating component moves through a partly open space with side walls.

In the course of the present description, the POSITIVE DISPLACEMENT is referred to as DISPLACEMENT.

Replacing a flexible trimmer line by a cutting blade design requires, for a safe and durable operation, that the cutting blade must be shielded. Then, it is necessary to feed grass or other vegetation through the cutting blade shield to be cut by the blade. In order to accomplish such task, the blade shield must comprise through-openings that allow the vegetation to reach the blade. By properly dimensioning the size of said openings, it is possible to combine the effects of protection of the blade and surrounding objects and walls with the safety for operators and/or other surrounding persons while assuring the desired cutting of vegetation.

However, just to move such a shielded cutting blade towards or through the grass would not give the desired performance as there would not be enough grass coming through the cutting blade shield. The cutting blade shield could also become clogged during such operation.

Therefore, with reference to the Figures 1 to 8, the trimmer head of the invention comprises a housing (27); a cutting blade (46); and a cutting blade shield (2) with a plurality of through-openings (21); the trimmer head characterized in that it further comprises a vacuuming air assembly arranged in the housing (27) such that, in operation, a vacuuming air flow is generated and directed from said cutting blade shield openings (21) to an interior of the housing (27).

**In** an embodiment, the present invention resorts to a trimmer head which, in operation, provides an enhanced vacuum flow to bring the vegetation towards and through the cutting blade shield (2) where it will be cut by the cutting blade (46). Some parts of the cut vegetation will stay outside of the cutting blade shield while other pieces of the cut vegetation will be vacuumed through the vacuum air intake (34) and the vacuum air intake zone (26). When passing through the vacuum air intake (34) and the vacuum intake zone (26), the vegetation pieces could be cut into even smaller pieces by the cutting blade (46) before being further vacuumed through a vacuum fan (7) and blown out through a vacuum fan scroll outlet (19). This is in addition to some vegetation will be mechanically pushed through cutting blade shield openings (21) of the blade shield when the operator of the machine moves the trimmer head through the vegetation.

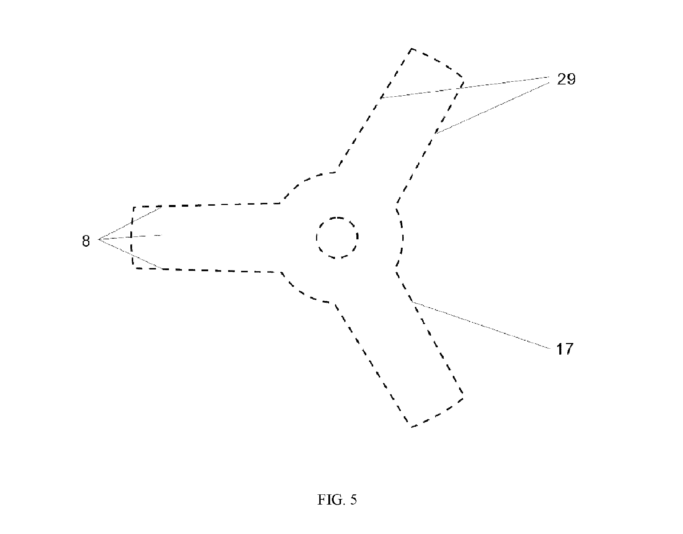

In a first attempt to accomplish the effect of bringing the vegetation towards and through the blade shield, a centrifugal fan (7) creating a vacuum flow with an vacuum air intake (34) behind the cutting blade shield was used in combination with a prior art cutting blade (8) like the one shown in Fig. 5 with three symmetric straight radial cutting knifes (17). However, while the resulting effect revealed to be satisfactory with the vacuum air intake (34) arranged close to the cutting blade shield (2) and with the vegetation to be cut close to the cutting blade shield (2), it also revealed it was prone for improvements.

In a second attempt to further improve, the size of the vacuum fan was increased to a level considered to be the maximum practically feasible size, or at least close to a maximum feasible size. The result showed to be an improvement due to the vacuum air-flow and air-speed increased significantly, but even more important, the vacuum pressure increased beyond the air-flow increase. Now the vacuuming effect showed to be much more effective. Still, a higher vacuum effect would be desirable.

Surprisingly, further attempts with different cutting blade shapes revealed that cutting blades with angled cutting blade knives gave an unanticipated high improvement of the vacuuming capability.

Compared to a cutting blade with radial cutting knifes, i.e. knives pointing straight in the radial direction (see fig. 5), a cutting blade with angled knives has cutting knives that are angled forwards or backwards in relation to the rotational direction or, in other words, it is a blade whose knives are angled with respect to a reference radial line (5).

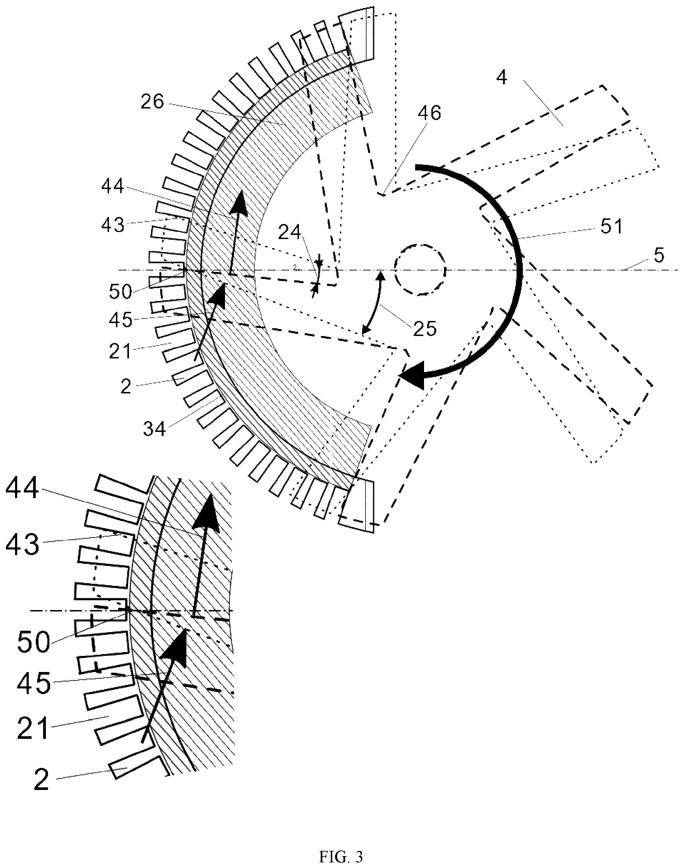

A cutting blade (46) with angled knives (4) is exemplified in Fig. 3, where the front of the cutting blade knife (4) is making an angle (24) at the reference point (50) versus the horizontal (radial) reference line (5). Correspondingly, the rear side of the cutting blade has an angle (25) versus the same radial reference line (5).

After a deeper analysis, it seems that when the cutting blade travels through the vacuum intake zone (26) and the vacuum air intake opening (34), there is a DISPLACEMENT of air created both by the front and rear sides of the angled cutting knives that strengthens the air-flow from the vacuum centrifugal fan (7). The cutting blade has a small clearance on each side, typically 2-5 mm, to the ground shield (10) and the vacuum air intake guide plate (11) and because of this the cutting blade to a large extent works as a continuous DISPLACEMENT pump in the vacuum air intake zone (26). This was further confirmed by reducing the clearance to less than 2 mm, which amplified the positive effect even further. However, such a small clearance less than 2 mm is not practically feasible amongst others due to tolerances and vibrations.

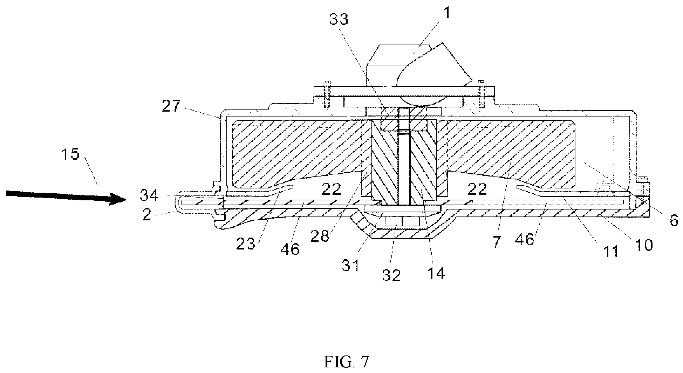

Due to the findings of the narrower clearances between the cutting blade (46) to the ground shield (10) and the vacuum air intake guide plate (11), attempts were also made to reduce the inner height of the cutting blade shield (2) to be close or equal to the height of the vacuum air intake (34) as shown in Fig. 7. This provided a further unexpected performance increase of the vacuuming performance through cutting blade shield (2).

As a result of the reduced inner height of the cutting blade shield (2), the clearance between the cutting blade (46) and the cutting blade shield (2) also became smaller. This provided another positive effect as the mechanical cleaning of the inside of the cutting blade shield (2) by the cutting blade (46) improved significantly.

When using a cutting blade (8) with straight radial knives (17), there is no DISPLACEMENT flow from the fan wings directed radially towards the vacuum centrifugal fan intake (22). There could be a very small pulsating DISPLACEMENT flow though that has no significant impact. Totally, the new cutting blade design (46) with angled cutting knives (4) and a narrow clearance in the range of 2-5 mm led to an enhanced result.

Attempts were also made to reduce the flow restrictions into the air intake (22) of the vacuum centrifugal fan. When changing the shape of the air intake guide plate (23) from a flat design to a tapered design by gradually increasing the distance to the cutting blade, the air intake flow restriction became smaller and the vacuum flow rate increased. To accomplish this, the shape of the vacuum fan wings had to be changed accordingly.

For the embodiment shown in Fig. 1, Fig. 2 and Fig. 3, the air-speed through the vacuum zone (26) created by the vacuum centrifugal fan (7) is on average 20 - 45 m/s at normal operational rotational speeds for the cutting blade and the fan. At the same time, the vacuum pressure is in the range of 25-130 mmH$_2$O, depending on the fan speed, when there is no vegetation or other restricting the flow. The vacuum pressure could increase when vegetation is sucked towards the cutting blade shield restricting the flow. Normal cutting blade rotational speeds are in the range of 4000 - 9000 RPM, however this could vary.

Alternatively, both the vacuum air speed and the vacuum air pressure could be enhanced by increasing the size of the vacuum fan further. However, this could result in the dimensions would be impractically large.

All of these findings have been observed and concluded from a prototype operation.

The cutting blade knives (4) do not restrict the vacuum air-flow in the vacuum air intake zone (26) as the knives just cover a small part of the perimeter.

In a preferred embodiment, heat treated steel is the choice for the cutting blade material.

The small fan blowing effect of the cutting blade is largely overpowered by the vacuuming fan. As an example, the fan blowing effect of the blade can be about 10 m3/h in the vacuum intake zone, while the vacuuming centrifugal fan (7) creates a vacuum air-flow of more than 200 m3/h at the same rotational speed. The result is an insignificant reduction of the vacuum flow. On the other hand, by using a cutting blade with angled cutting knives the said blowing effect is even more counteracted by the above-mentioned effect of DISPLACEMENT of air created by both the front and rear sides of the angled cutting knives.

The vacuum fan and cutting blade are integrated into the cutting device housing.

The vacuumed air contains a mix of air, cut vegetation pieces and dirt. A vacuum fan scroll opening (19) is therefore directed away both from the operator and from the cutting blade shield to avoid already cut vegetation re-enters the system or disturbs the operator. The output flow deflector should also be designed to guide the flow downwards to minimize dust particles blowing around.

The preferred embodiment is made to be as self-cleaning as possible in order to extend the maintenance intervals. Because of this, the clearance between the vacuum fan, the fan housing and other internal components is kept as small as functionally possible, to also get a continuous mechanical cleaning. The same principle applies for the cutting blade that also keeps the inside of the cutting blade shield free from cut vegetation pieces and dirt. In practice this means the clearances should be less than 5 mm or smaller where it is practically feasible. The fan wings are designed to collect as little dirt as possible and are therefore pointing straight radially and mainly have a straight shape to minimize spots that could collect dirt.

Additional cleaning of the vacuum fan could be made by detaching the ground shield. If an even more extensive cleaning would be required, the bolt that keeps the cutting blade and the fan wheel in place could be detached. In most cases it should however be sufficient to clean by using compressed air, rinsing by water or other.

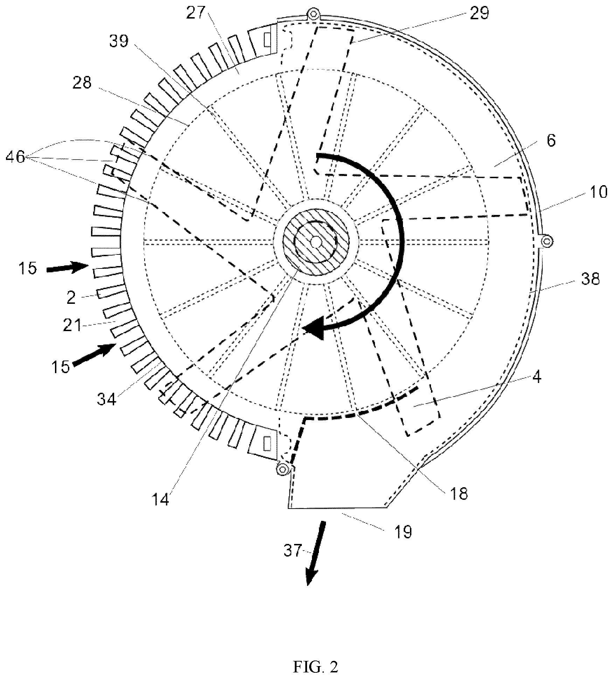

Furthermore, referring to the embodiment of Fig. 2, the cutting blade shield (2) and the cutting blade shield openings (21) could have different depth depending on application. The openings could also have different widths and the cutting blade shield (2) with through-openings (21) could also cover different perimeter angles and/or comprise different arrangements of through-openings (21), for example, alternate arrangements of solid parts and parts with through-openings.

In fact, in one embodiment, the cutting blade is already shielded 360 degrees considering the cutting blade shield (2) with through-openings (21), the trimmer head housing (27) and the ground shield (10). One main reason for using a separate cutting blade shield (2) with through-openings (21) is that such a cutting blade shield could be made of a more robust and durable material as the cutting blade shield (2) frequently comes in contact with various objects. Also, the cutting blade shield openings (21) make the cutting blade shield (2) weaker, which is another reason for choosing a more robust material, for example heat treated steel. Other reasons are, the cutting blade shield (2) is replaceable in case it becomes worn and also interchangeable with variants for different applications and work situations.

Preferably, the cutting blade shield (2) with through-openings (21) covers a perimeter of at least 120 angle degrees. In principle, a cutting blade shield (2) could cover the whole perimeter. However, in practice, a cutting blade shield with through-openings that covers up to about 200 angle degrees should be feasible. It must be clarified that the larger perimeter coverage, the lower air-speed and vacuum pressure through the vacuum air intake (34) and the vacuum air intake zone (26), as the height (width) of the vacuum air intake zone (26) and vacuum air intake (34) must be large enough for the cutting blade (46) plus sufficient clearance tolerances. A larger perimeter coverage of the cutting blade shield (2) could also interfere with the space for the fan scroll (6, 38) reducing the vacuuming capacity. The latter could potentially be solved by another design of the fan scroll, for example placing it on top of the housing (27), however this might result in a bulkier and less favourable design. Therefore, a perimeter coverage in the range of 120 - 200 angle degrees is preferred even if some specialty applications may require either smaller or larger coverage.

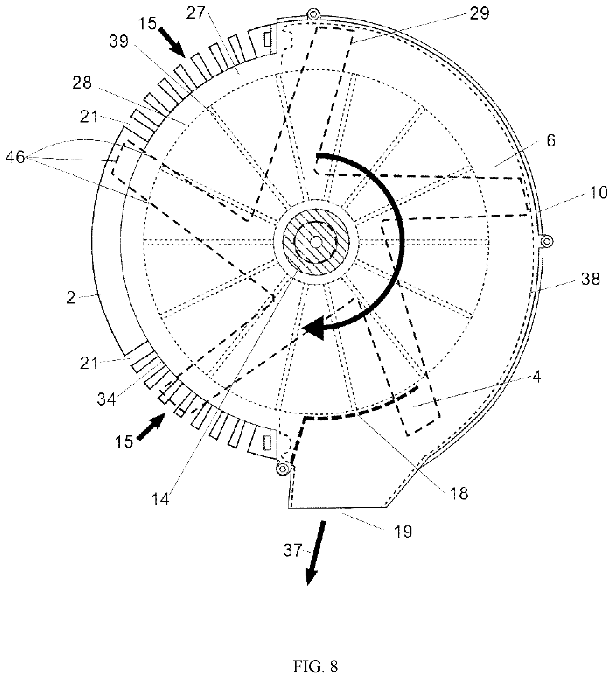

Some applications may benefit from the cutting blade shield openings (21) are distributed in various patterns and/or the number of cutting blade shield openings is reduced, for example, in applications where the cutting pattern is mainly sideways. In this way the perimeter coverage can be kept down to enhance the vacuuming performance. This could be accomplished in several ways. For example, either by a cutting blade shield (2) where a part of the cutting blade shield (2) has no through-openings (21), like in the embodiment of Fig. 8, or by the cutting blade shield (2) is split up in more than one part.

Even if it is possible to split up the cutting blade shield (2) in several parts, it has a potential disadvantage of the section in between the cutting blade shield parts may instead be part of the housing (27) and the ground shield (10). As the cutting blade shield preferably should be made of a more durable material, such a solution could reduce the life-time and make the trimmer head more difficult and expensive to repair if needed. It is very likely that a section in between the cutting blade shield parts would be subject to harsh mechanical abuse as it still would be in or close to the working zone.

The width of each of the cutting blade shield openings should be in the range of 4 to 12 mm, preferably it is in the range of 4-8 mm. Bigger sizes may be required for certain work situations. This is possible as the cutting blade shield is interchangeable. The maximum size of the cutting blade shield openings depends on work type, user experience and safety requirements including personal protective equipment.

The operational speed of cutting blade with a diameter of about 250 mm is typically in the range of 4000-9000 RPM.

Furthermore, it has been surprisingly found that using a cutting blade (46) with an odd number of cutting knives (4) and a vacuuming fan (7) with an even number of fan wings (39) or, conversely, a cutting blade (46) with an even number of cutting knives (4) and a vacuuming fan (7) with an odd number of fan wings (39), the noise pattern of the trimmer head in operation is less disturbing than with odd-odd or even-even relations regarding the number of knives (4) to the number of fan wings (39). In other words, the best noise reduction effect is achieved when the number of cutting blade knifes plus the number of fan wings is an odd number.

A more detailed description of Figures 1 to 8 is provided hereinafter.

Fig. 1 and 2 show an embodiment of the cutting blade trimmer head attached to a gearbox (1), (or flexible shaft attachment), with a housing (27), a cutting blade (46), a cutting blade shield (2) with openings (21) for the vacuum air intake flow and for the vegetation to be cut, a vacuum centrifugal fan (7) with an vacuum air intake (34), and a fan scroll (6) for the vacuum air-flow. Furthermore, there is an intake air guide plate (11) for the air intake (22) to the vacuum fan (7). Closer to the centre of the fan wheel, the air guide plate (11) has a tapered shape (23) that gradually increases the intake area into the vacuum fan wheel air intake (22) in order to minimize flow restrictions. Prior art usually resorted to flat designs creating higher air-flow restriction. Arrows (15) schematically show the air-flow towards and through the cutting blade shield. The vacuum fan (7) is in this embodiment created by using a single moulded, die-cast or 3D-printed fan wheel (28). The fan wheel also has an insert hub (14). In this design the diameter of the fan is 200 mm. The fan scroll (6) has an outer shape (38). Furthermore, to save space the fan scroll (6) does not cover the full outer perimeter of the fan wheel. This reduces the fan capacity somewhat, however the capacity is still sufficient. A ground shield (10) enhances the safety and also protects the vegetation and the cutting blade. The cutting blade (46) and the fan wheel (28) is kept in place by a washer (31) and a bolt (32) that goes through the hub (14) of the fan wheel (28) and is bolted to the hub (33) of the gearbox/flexible shaft (1). To mount or demount the cutting blade, the ground shield (10) must first be detached. The gearbox (1) can be equipped with a hole for a locking pin to simplify mounting and demounting the cutting blade. As an alternative, the fan wheel (28) is bolted to the cutting blade (46). Such a solution requires a metal piece between the cutting blade (46) and the hub (33) of the gearbox/flexible shaft (1) to provide a robust function.

Fig. 2 shows the housing (27), the cutting blade shield (2), the cutting blade (46), the cutting blade knives (4), the sharp edge (29) of the cutting blade knives, totally five cutting blade knives in this embodiment, the shape of the fan wheel (28) and the fan wheel wings (39), totally 14 wings in this embodiment, the shape of the fan scroll (6, 38), the finger protection (18) for the fan scroll, the air-flow (15) towards and through the cutting blade shield (2), the cutting blade shield openings (21) and the vacuum air intake (34) just behind the cutting blade shield. A vacuum air fan scroll outlet (19) is directed not to disturb the vacuum intake air flow and also not to distract the operator. The arrow (37) shows the direction of the air-flow from the vacuum air fan scroll outlet (19).

As an option, a blade-rotating prevention mechanism could be engaged when removing the ground shield to prevent the cutting blade from rotating. Such a mechanism could also be used to simplify mounting and demounting of the cutting blade.

Fig. 3 shows a schematic top view, including a local magnification, of the preferred cutting blade (46) design, the cutting blade shield (2), the vacuum air intake (34), the vacuum air intake zone (26), the angle reference line (5), the angle (24) of the front side of the cutting blade knife (4) versus the reference line (5) when the front of the cutting blade knife has reached the reference point (50), the angle (25) of the rear side of the cutting blade knife (4) versus the reference line (5) when the rear side of the cutting blade knife (4) has reached the reference point (50), the cutting position (43) of the cutting blade knives (4) relative the cutting blade shield opening (21), the flow direction (44) of the DISPLACEMENT flow from the front of the cutting blade knife (4) and the vacuum flow DISPLACEMENT flow direction (45) from the rear of the cutting blade knife (4).

Still referring to Fig. 3, for the parts of the cutting blade knife (4) that are within the vacuum air intake zone (26), the cutting blade partly works as a continuous DISPLACEMENT pump. The DISPLACEMENT flow directions follow the arrows (44, 45) for the front and rear of the cutting blade knives. On the front side [taking the reference of a clockwise rotation as the rotational direction (51) of the cutting blade (46)] of the cutting blade knife, the DISPLACEMENT flow is created by a pressure, while on the rear side of the cutting knife it is created by a vacuum. The air-speeds of the displacement flows towards the centre of the cutting blade depend on the rotational velocity of the cutting blade knives in the vacuum air intake zone (26) and the front and rear angles (24, 25) of the cutting blade knifes.

Hence, the speed towards the centre of the cutting blade, $V_{CENTRE} = V_{ROTATIONAL}$ x SIN (ANGLE). In this embodiment, for the front of the blade the angle (24) is about 7 degrees, while the rear angle is about 21 degrees. As an example, for a rotational cutting blade knife speed of 70 m/s in the vacuum air intake zone (26), $V_{CENTRE}$ becomes 8.3 m/s at the front of the cutting knife and 25.1 m/s at the rear of the cutting blade knife. As the cutting knife blades do not cover the full height of the vacuum zone, the overall DISPLACEMENT contribution becomes about 50% lower compared to if the cutting blade had the same height (width) as the height (width) of the vacuum intake (34). Still, an important contribution.

Thus, in the context of the present invention, the said front angle (24) is in the range of 1 to 15 degrees; and the rear angle (25) is in the range of 10 to 35 degrees. There are no absolute limits for these angles. Too large angles could however restrict the air-flow into the vacuum fan air intake (22) due to the inner diameter of the cutting blade knifes would increase mainly because of the geometry of the rear side of the cutting blade. The result would be a larger base diameter of the cutting blade as the width of the cutting blade knifes cannot be reduced for strength and fatigue reasons.

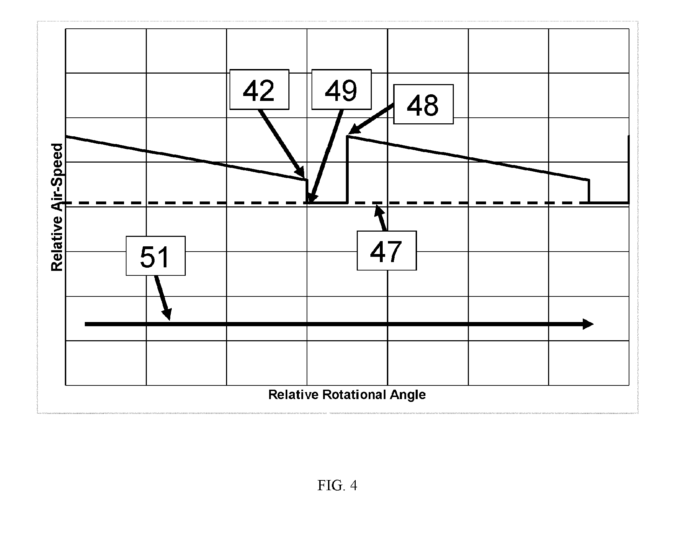

Fig. 4 shows a schematic graph that explains the air-flow speed through the vacuum air intake zone (26) into the air intake (22) of the centrifugal vacuum fan (7) when using the preferred cutting blade with angled knifes (4) shown in Fig. 3. The curve with items (42), (48) and (49) explains the air-speed in a simplified way when one of the knifes (4) of the cutting blade (46) is passing by a certain point, for example the reference point (50) shown in Fig. 3. The arrow (51) shows the rotational direction of the cutting blade. The line (47) shows the air-flow speed in the vacuum air intake zone (26) generated by the vacuuming centrifugal fan (7) that flows towards the air intake (22) of the vacuum centrifugal fan (7). When the front edge of one of the cutting blade knives reaches the reference point (50), the air-speed is reduced (49) while the cutting blade knife passes by. To clarify, the curve (42, 48, 49) shows the total air-flow speed, not the air mass-flow, even though the air mass-flow is linear with the air-flow speed except for when the cutting blade knives restrict the flow between the points (49) and (48). When this occurs, the displacement speed does go down to zero at the minimum displacement level (49), while there still is a small air-flow between cutting blade knife and the side-walls of the vacuum zone (26). This air-flow has approximately the same air-speed as the air-speed (47) created by the vacuuming fan. The total air-speed level (47) from the vacuum fan (7) is approximately constant as most of the vacuum intake zone (26) is still open and has a relatively constant opening area between the cutting blade knives. When the rear side of the cutting blade knife has reached the reference point (50), the DISPLACEMENT air-speed reaches its highest level (48) due to the larger angle of the rear side of the cutting blade knife (4). Then the DISPLACEMENT air-speed gradually decreases down to the level (42) of the front side of the cutting blade knife until a new cycle begins.

In practice, this is a continuous process where the DISPLACEMENT flow moves along with the cutting blade knife. As the cutting blade, in this embodiment, has five knives, more than one knife could be in the vacuum air intake zone at the same time, contributing to the total vacuum air-flow and air-flow speed. The continuous vacuum air-flow created by the vacuuming fan secures there is always an air-flow and air-speed (47) towards the air intake (22) of the vacuuming fan (7).

Surprisingly, the fact that the total vacuum air-flow becomes pulsating relative a fixed point of the cutting blade shield, for example the reference point (50), has proven to be an advantage as it reduces the risk the cutting blade shield (2) becomes plugged by vegetation and dirt.

It should also be clarified that the cutting blade knives (4) perform a displacement flow also outside the vacuum air intake zone (26) in the space between the intake air guide plate (11) and the ground shield (10). This does not affect the overall vacuum flow as it is a rotational flow and the outlet is through the air intake (22) of the vacuuming fan (7). This rotational displacement flow could however help to push in cut vegetation pieces and dirt into the vacuuming fan intake (22) and be a part of the self-cleaning process. Some already cut vegetation pieces could also enter into the rotational displacement flow to be cut into even smaller pieces before entering into the air intake (22) of the vacuuming fan (7).

Fig. 5 shows a top view of a prior art cutting blade (8), with three symmetrical straight radial cutting knives (17), wherein each of said knives (17) is not angled in relation to a reference radial line (5) or, in other words, each knife (17) presenting a 0 degrees angle with said reference radial line (5) as opposing to the above mentioned angled knives (4) of Fig. 3.

This prior art cutting blade of Fig. 5 is shown to explain the difference between the preferred cutting blade of the invention shown in Fig. 3 and said prior art embodiment. Of course, prior art designs can be used together with the subject invention but with less degree of improvement compared to using the preferred cutting blade embodiment of Fig. 3.

This prior art design of Fig. 5 is mainly made to make it possible to use both sides of the cutting knives (17) as the cutting knives have sharp edges (29) on both sides. Due to the straight slightly tapered shape of the cutting blade knifes there is on average no DISPLACEMENT air-flow effect towards the vacuum fan intake (22). There is a less significant pulsating DISPLACEMENT flow though. Due to the tapered design where the front of the cutting blade knife has a negative

EP 4 110 036 B1

angle of about 1.5 degrees and the rear of the cutting blade has a positive angle of about 1.5 degrees, the front side of the cutting blade knives create a small negative DISPLACEMENT flow while the rear side of the cutting blade knives create a small positive DISPLACEMENT flow. On average, the total DISPLACEMENT flow is zero.

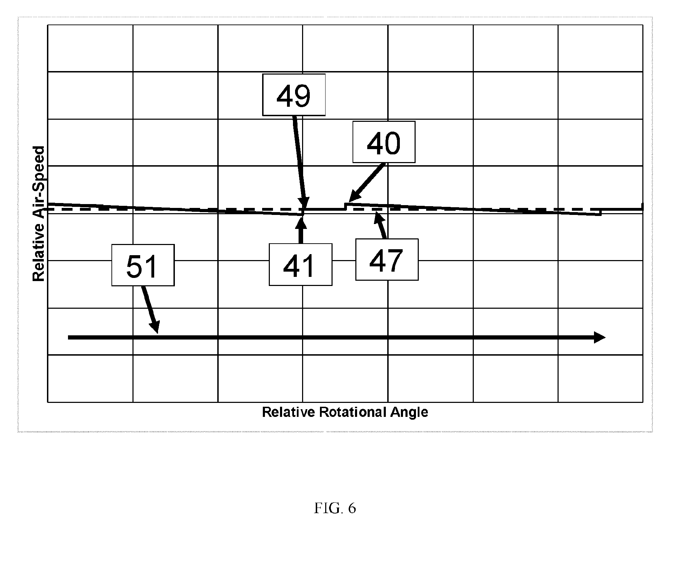

Fig. 6 explains the DISPLACEMENT air-flow in the vacuum intake zone (26) of the prior art cutting blade design according to Fig. 5. Compared to the DISPLACEMENT air-flow from the preferred cutting blade design shown in Fig. 3 and explained in Fig. 4, there is no total positive DISPLACEMENT flow. Instead, there is a very small pulsating DISPLACEMENT flow that varies between a positive peak value (40) and a negative peak value (41). The average resulting DISPLACEMENT flow is zero. The positive peak DISPLACEMENT flow is about 14 times smaller compared to the maximum DISPLACEMENT flow (48) for the preferred cutting blade design. Overall, the prior art cutting blade design does not produce a useful DISPLACEMENT flow and the flow pulsations are too small to reduce potential clogging of the cutting blade shield (2).

Fig. 7 shows schematically a section view of another embodiment of the trimmer head of the invention. The difference to the embodiment of Fig. 1 is, the inner height of the cutting blade shield (2) is reduced and it is about the same height of the vacuum air intake (34) in order to increase the vacuum air speed and vacuum air pressure through the cutting blade shield for better vacuuming efficiency. This particular embodiment also improves the self-cleaning of the inside of the cutting blade shield (2) made by the cutting blade knives (4).

Fig. 8 shows an embodiment wherein the number of cutting blade shield openings (21) of the cutting blade shield (2) is reduced over the solution depicted in Fig. 2. A solid part of the cutting blade shield (2) is arranged between two through-openings parts of the blade shield (2), resulting in a cutting blade shield (2) that partially lacks cutting blade shield openings (21). This could be more efficient for some applications, for example where the trimmer head is mainly moved sideways. By reducing the total number of cutting blade shield openings, the total air intake area is kept down enabling a higher vacuum air speed and thus a higher vacuuming efficiency.

Several advantages of the invention are identified below:

- Using a totally shielded cutting blade is safer as only objects smaller than the cutting blade shield openings could come through.

- The shielded cutting blade will stay sharp for a longer period of time.

- The shielded cutting blade does not destroy objects or scalp the vegetation.

- Most of the cut vegetation will stay outside the trimmer and cutting device housing and remaining pieces will be cut into smaller pieces by the cutting blade knives before entering into the vacuum centrifugal fan intake (22).

- The new design of the cutting blade knifes (4) also gives a locking effect (43) of the vegetation to be cut towards the cutting blade shield openings (21). This secures the vegetation is properly cut and not unnecessarily being pushed out of the cutting blade shield openings (21).

- The maximum working speed of the power source will be more stable. No noise peaks caused by worn or broken trimmer line increasing the rotational speed as there is always a stable power needed to drive the centrifugal fan.

- The vacuuming air stream largely overpowers the fan effect of the cutting blade. This means, the remaining airstream will bring the vegetation closer to the cutting head, not in the opposite direction.

- The pulsating vacuuming air-flow created by the cutting blade (46) using the DISPLACEMENT effect improves the vacuuming performance and reduces the risk the cutting blade shield will be plugged by vegetation including already cut vegetation.

- The cutting blade and vacuum fan are inside the trimmer head housing, which reduces the noise level. At 7500 RPM speed, the cutting blade has a 1st order frequency of 625 Hz and the fan with 14 fan wings has a 1st order frequency of 1750 Hz. These frequencies are relatively high, which enables the housing to work also as a silencer.

- As the cutting blade has an uneven number of knives compared to the fan, which has an even number of fan wings, the noise pattern including overtones will be more of a less disturbing general noise rather than a few single frequency peaks that could be more annoying. The similar more favourable lower noise pattern also occurs where the cutting blade has an even number of cutting blade knives and the fan has an odd number of fan wings.

- The noise level is also lower than using a trimmer line due to the centrifugal fan would be dimensioned for a lower pulling torque and power compared to pulling trimmer lines. The power to pull a trimmer head with trimmer lines is actually quite high, commonly in the 400 - 800 W range or even higher for thick and long lines. The noise level can be related to the pulling power. The relative noise dB level should therefore follow the equation below;

$$\text{Relative Noise Level (dB)} = 10 \text{ x log (Fan Power [W] / Trimmer Line Power [W]).}$$

For example, if it takes 700 W to pull the trimmer line and 250 W to pull the fan, the noise level for the fan should be about 4.5 dB lower.

The power to pull the cutting blade as such at no-load is low compared to the fan power and is not significant.

- The power needed to cut grass with a sharp flat thin cutting blade is significantly lower compared to using a trimmer line.

- Robotic Lawn Mowers is also a suitable application for the subject invention as it enhances safety and allows the grass to be cut close the perimeter of the lawn. In this, and other potential product applications, there could be a need for a straight shaft attachment instead of a gearbox/ flexible shaft (1).

- The whole trimmer head design is to a large extent self-cleaning due to the rotating parts have small clearances to the fixed parts, the vacuuming air-stream blows out dirt and vegetation pieces and the pulsating DISPLACEMENT flow helps the whole system to stay clean.

**REFERENCE NUMBERS**

| | |
|---|---|
| 1 | gearbox/flexible shaft |
| 2 | cutting blade shield |
| 4 | angled cutting blade knife |
| 5 | radial reference line |
| 6 | vacuum fan scroll |
| 7 | vacuum centrifugal fan |
| 8 | prior art cutting blade with 3 radial knifes |
| 10 | ground shield |
| 11 | intake air guide plate |
| 14 | insert hub |
| 15 | air-flow towards and through the cutting blade shield |
| 17 | straight radial knives |
| 18 | finger protection |
| 19 | vacuum air fan scroll outlet |
| 21 | cutting blade shield through-openings |
| 22 | air intake |
| 23 | air intake guide plate tapered larger opening area |
| 24 | front angle of cutting blade knife - sharp edge side |
| 25 | rear angle of cutting blade knife - dull edge side |
| 26 | vacuum air intake zone |
| 27 | housing |
| 28 | fan wheel |
| 29 | sharp edge of cutting knife (4) |
| 31 | washer |
| 32 | bolt |
| 33 | hub |
| 34 | vacuum air intake |
| 37 | air-flow from the vacuum air fan scroll outlet (19) |
| 38 | fan scroll shape |
| 39 | vacuum fan wings |
| 40 | maximum vacuum zone vacuum displacement effect for prior art cutting blade design |
| 41 | maximum negative vacuum zone pressure displacement effect for prior art cutting blade design |

42  vacuum zone pressure displacement effect from front of cutting blade knife
43  cutting blade position, locking angle, against cutting blade shield opening
44  cutting blade displacement pump effect
45  cutting blade displacement vacuum pump effect
46  cutting blade
47  vacuum zone air-speed from vacuum centrifugal fan
48  maximum vacuum zone vacuum displacement effect from rear of cutting blade knife
49  minimum vacuum zone displacement effect (zero)
50  Reference point for cutting blade knife
51  Rotational direction

The description herein should be construed as non-limitative of the scope thereof which is defined only by the independent claim. The dependent claims define particular embodiments of the invention.

## Claims

1. A trimmer head comprising:

   • a housing (27),
   • a cutting blade (46),
   • a cutting blade shield (2),

   wherein

   the cutting blade shield (2) comprises a plurality of through-openings (21) such that, in operation, the said through-openings (21) allow vegetation to reach the said cutting blade (46), and
   the trimmer head further comprises a vacuuming air assembly arranged in the housing (27), the vacuuming air assembly comprising at least one vacuum air intake (34) pointing to said through-openings (21), such that, in operation, a vacuuming air flow is generated and directed from said cutting blade shield openings (21) to an interior of the housing (27),
   **characterized in that** an inner height of the cutting blade shield (2) is about the same height of the vacuum air intake (34).

2. The trimmer head according to claim 1, wherein the vacuuming air assembly comprises a vacuuming centrifugal fan (7) arranged in air-connection with at least one of the cutting blade shield through-openings (21), such that, in operation, the centrifugal fan (7) vacuums air through said, at least one, cutting blade shield through-openings (21).

3. The trimmer head according to claim 2, further comprising a vacuum air intake zone (26) arranged in between the vacuum air intake (34) and an air intake (22) of the vacuuming centrifugal fan (7).

4. The trimmer head according to claim 2 or 3, wherein the vacuuming centrifugal fan (7) comprises 8 to 20 fan wings (39), preferably 14 fan wings (39).

5. The trimmer head according to any of the preceding claims, wherein the cutting blade (46) is a rotating blade comprising at least one knife (4) that is angled in relation to a reference radial line (5), preferably comprising 2 to 6 knives (4), more preferably comprising 5 knives (4).

6. The trimmer head according to claim 5, wherein at least one cutting blade knife (4) of the rotating cutting blade (46) is angled forwards in the rotational direction (51) relative a reference radial line (5).

7. The trimmer head according to claim 5, wherein a total number of cutting blade knives (4) and vacuuming fan wings (39) is an odd number.

8. The trimmer head according to any of the preceding claims, further comprising a ground shield (10) fixedly attached or detachably attached to the housing (27).

9. The trimmer head according to claim 8, wherein the housing (27) is made of a plurality of parts and the ground shield (10) is fixed to, or detachable from, at least one of said plurality of parts.

10. The trimmer head according to any of the preceding claims, wherein the cutting blade shield (2) is attachable to and detachable from the housing (27).

11. The trimmer head according to any of the preceding claims, wherein the cutting blade shield (2) comprises at least one solid part and at least one through-openings part, preferably comprises one solid part arranged between two through-openings parts.

12. The trimmer head according to any of the preceding claims, wherein each of the plurality of through-openings (21) of the cutting blade shield (2) has a width in the range of 4 to 12 mm.

13. The trimmer head according to any of the preceding claims, wherein clearances between parts are less than 5 mm, preferably in the range of 2 to 5 mm, more preferably of 2 mm.

**Patentansprüche**

1. Trimmerkopf umfassend:

   • ein Gehäuse (27),
   • ein Schneidmesser (46),
   • einen Schneidmesseschutz (2),

   wobei

   der Schneidmesseschutz (2) umfasst eine Vielzahl von Durchgangsöffnungen (21), sodass im Betrieb die besagte Durchgangsöffnungen (21) das Erreichen der Schneidmesser (46) durch die Vegetation ermöglichen, und
   der Trimmerkopf umfasst auch eine Vakuumluftanordnung, die im Gehäuse (27) angeordnet ist, wobei die Vakuumluftanordnung zumindest einen Vakuumlufteinlass (34), der in den Durchgangsöffnungen (21) weist, umfasst, sodass im Betrieb ein Vakuumluftstrom erzeugt wird und es von besagten Schneidmesserschutzöffnungen (21) in ein Inneres des Gehäuses (27) gerichtet wird.

   **dadurch gekennzeichnet, dass** die innere Höhe des Schneidmesseschutzes (2) etwa der Höhe des Vakuumlufteinlasses (34) entspricht.

2. Trimmerkopf nach Anspruch 1, wobei die Vakuumluftanordnung einen Vakuum-Radialventilator (7) umfasst, der in Luftverbindung mit zumindest einer der Durchgangsöffnungen (21) des Schneidmesseschutzes angeordnet ist, sodass im Betrieb der Vakuum-Radialventilator (7) Luft durch die besagte, zumindest eine, Durchgangsöffnungen (21) des Schneidmesseschutzes saugt.

3. Trimmerkopf nach Anspruch 2, ferner umfassend eine Vakuumlufteinlassbereich (26), die zwischen dem Vakuumlufteinlass (34) und einem Lufteinlass (22) des Vakuum-Radialventilators (7) angeordnet ist.

4. Trimmerkopf nach Anspruch 2 oder 3, wobei der Vakuum-Radialventilator (7) 8 bis 20 Ventilatorflügel (39), vorzugsweise 14 Ventilatorflügel (39), umfasst.

5. Trimmerkopf gemäß einem der vorhergehenden Ansprüche, wobei der Schneidmesser (46) ein rotierendes Messer ist, welches zumindest ein Messer (4), das gegenüber einer radialen Referenzlinie (5) abgewinkelt ist, vorzugsweise umfassend 2 bis 6 Messer (4), besonders bevorzugt 5 Messer (4).

6. Trimmerkopf nach Anspruch 5, wobei zumindest ein Schneidmesser (4) des rotierenden Schneidmessers (46) in Drehrichtung (51) relativ zu einer radialen Referenzlinie (5) nach vorne geneigt ist.

7. Trimmerkopf nach Anspruch 5, wobei die Gesamtzahl der Schneidmesser (4) und Vakuumventilatorflügel (39) eine ungerade Zahl ist.

**8.** Trimmerkopf gemäß einem der vorhergehenden Ansprüche, ferner umfassend eine Erdungsabschirmung (10), die fest oder lösbar mit dem Gehäuse (27) befestigt ist.

**9.** Trimmerkopf nach Anspruch 8, wobei das Gehäuse (27) aus mehreren Teilen besteht und die Erdungsabschirmung (10) an zumindest einem dieser Teile befestigt oder von diesem lösbar ist.

**10.** Trimmerkopf gemäß einem der vorhergehenden Ansprüche, wobei der Schneidmesserschutz (2) am Gehäuse (27) befestigbar und von diesem lösbar ist.

**11.** Trimmerkopf gemäß einem der vorhergehenden Ansprüche, wobei der Schneidmesserschutz (2) zumindest einen festen Teil und zumindest einen Durchgangsöffnungensteil umfasst, vorzugsweise einen festen Teil, der zwischen zwei Durchgangsöffnungensteilen angeordnet ist, umfasst.

**12.** Trimmerkopf gemäß einem der vorhergehenden Ansprüche, wobei jede der Vielzahl von Durchgangsöffnungen (21) des Schneidmesserschutzes (2) eine Breite im Bereich von 4 bis 12 mm besitzt.

**13.** Trimmerkopf gemäß einem der vorhergehenden Ansprüche, wobei Abstände zwischen den Teilen weniger als 5 mm, vorzugsweise im Bereich von 2 bis 5 mm, besonders bevorzugt 2 mm betragen.

**Revendications**

**1.** Tête de coupe comprenant :

  • un boîtier (27),
  • une lame de coupe (46),
  • un bouclier de lame de coupe (2),

dans laquelle

le bouclier de lame de coupe (2) comprend une pluralité d'ouvertures traversantes (21) de telle sorte que, en fonctionnement, lesdites ouvertures traversantes (21) permettent à la végétation d'atteindre ladite lame de coupe (46), et
la tête de coupe comprend en outre un ensemble d'aspiration d'air disposé dans le boîtier (27), l'ensemble d'aspiration d'air comprenant au moins une entrée d'air sous vide (34) dirigée vers lesdites ouvertures traversantes (21), de telle sorte que, en fonctionnement, un flux d'aspiration d'air est généré et dirigé depuis lesdites ouvertures (21) du bouclier de lame de coupe vers un intérieur du boîtier (27).

**caractérisé en ce qu'**une hauteur intérieure du bouclier de lame de coupe (2) est à peu près égale à la hauteur de l'entrée d'air sous vide (34).

**2.** Tête de coupe selon la revendication 1, dans laquelle l'ensemble d'aspiration d'air comprend un ventilateur centrifuge à aspiration (7) disposé en communication d'air avec au moins l'une des ouvertures traversantes du bouclier de lame de coupe (21) , de telle sorte que, en fonctionnement, le ventilateur centrifuge (7) aspire l'air à travers ladite au moins une ouverture traversante du bouclier de lame de coupe (21).

**3.** Tête de coupe selon la revendication 2, comprenant en outre une zone d' entrée d'air sous vide (26) disposée entre l'entrée d'air sous vide (34) et une entrée d'air (22) du ventilateur centrifuge à aspiration (7).

**4.** Tête de coupe selon la revendication 2 ou 3, dans laquelle le ventilateur centrifuge à aspiration (7) comprend 8 à 20 ailettes de ventilateur (39), de préférence 14 ailettes de ventilateur (39).

**5.** Tête de coupe selon l'une quelconque des revendications précédentes, dans laquelle la lame de coupe (46) est une lame rotative comprenant au moins un couteau (4) qui est incliné par rapport à une ligne radiale de référence (5), comprenant de préférence 2 à 6 couteaux (4), de préférence 5 couteaux (4).

**6.** Tête de coupe selon la revendication 5, dans laquelle au moins un couteau de lame de coupe (4) de la lame de coupe rotative (46) est inclinée vers l'avant dans le sens de rotation (51) par rapport à une ligne radiale de référence (5).

**7.** Tête de coupe selon la revendication 5, dans laquelle le nombre total de couteaux de lame de coupe (4) et d'ailettes de ventilateur à aspiration (39) est un nombre impair.

**8.** Tête de coupe selon l'une quelconque des revendications précédentes, comprenant en outre un bouclier de sol (10) fixé de manière permanente ou amovible au boîtier (27).

**9.** Tête de coupe selon la revendication 8, dans laquelle le boîtier (27) est constitué d'une pluralité de pièces et le bouclier de sol (10) est fixé à, ou détachable d'au moins une de ladite pluralité de pièces.

**10.** Tête de coupe selon l'une quelconque des revendications précédentes, dans laquelle le bouclier de lame de coupe (2) peut être fixé et détaché du boîtier (27).

**11.** Tête de coupe selon l'une quelconque des revendications précédentes, dans laquelle le bouclier de lame de coupe (2) comprend au moins une partie pleine et au moins une partie à ouvertures traversantes, comprend de préférence une partie pleine disposée entre deux parties à ouvertures traversantes.

**12.** Tête de coupe selon l'une quelconque des revendications précédentes, dans laquelle chacune de la pluralité de ouvertures traversantes (21) du bouclier de lame de coupe (2) a une largeur comprise entre 4 et 12 mm.

**13.** Tête de coupe selon l'une quelconque des revendications précédentes, dans laquelle les jeux entre les pièces sont inférieurs à 5 mm, de préférence compris entre 2 et 5 mm, et plus préférablement de 2 mm.

FIG. 1

FIG. 2

FIG. 3

FIG. 4

FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4987681 A
- EP 1364571 A2
- GB 1143812 A
- US 2017290261 A1
- US 2005076514 A1
- WO 2010062199 A2
- US 5210996 A
- DE 202007001567 U1